# EUROPEAN PATENT APPLICATION

(11) **EP 2 099 146 A1**
(43) Date of publication of application: **09.09.2009**
(21) Application number: 08102246.9
(22) Date of filing: 04.03.2008
(51) Int. Cl.: H04J 3/06, G04G 5/00, H04M 1/725

(54) **Network clock for mobile phones**

(71) Applicant: Cambridge Positioning Systems Limited, Cambridge Science Park Milton Road Cambridgeshire Cambridge (GB)
(72) Inventor: Duffet-Smith, Peter James c/oCambridge Positioning Systems Limited, Cambridge, Northamptonshire CB4 0WH (GB)
(74) Representative: Brunner, Michael John

(57) **Abstract**

There are disclosed a method and system of obtaining a time mark aligned with a known universal time boundary in a mobile terminal of a digital communications network. The method includes setting up a two-way connection between the mobile terminal and an answering point connected to a processor which has access to a universal time clock. A signal is generated in the answering point and sent to the mobile terminal. The signal is received at the mobile terminal and re-sent back to the answering point where it is received and the time delay between the generation and reception of the signal at the answering point is measured. From the measured time delay, a second time delay between the generation of the signal at the answering point and the reception of the signal in the mobile terminal is calculated. Then, in one embodiment, the timing of a second signal transmitted by the answering point is advanced by the second time delay, relative to the known universal time boundary, and the second signal received by the mobile phone is used as the time mark aligned with said known universal time boundary. In the alternative, the calculated second time delay is sent to the mobile terminal; and the signal received by the mobile phone is used as the time mark aligned with a delayed known universal time boundary, the delay being calculated using the calculated second time delay.

## Description

### Field of the Invention

The invention relates generally to the transfer of accurate time information in mobile communications networks, and in particular to the provision of accurate time information to a mobile terminal of an unsynchronised communications network such as GSM.

### Background

There are several reasons for needing accurate time information in a mobile terminal, but of particular interest here is the need to support a satellite positioning receiver. Examples of Global Navigation Satellite Systems (GNSS) include the Global Positioning System (GPS), Compass, Galileo, the Quasi-Zenith Satellite System (QZSS) etc. For example, in a mobile telephone of a communications system, a GPS receiver may be used to provide the position of the terminal to an emergency service, or for access to some other location-based service. The problem encountered in such use is that the mobile telephone may be inside a building or other shielded space where the satellite signals are attenuated detrimentally. The GPS receiver then usually has to perform lengthy searches involving long integration times to acquire the signals from each satellite in view, resulting in an unacceptable delay before the position becomes available or the acquisition process fails. The delay can be shortened in GPS receivers having access to accurate time and/or frequency information as the search window in time and/or frequency can then be narrowed, requiring fewer correlations and shorter searches. If the time and/or frequency information is sufficiently accurate, it may be possible to identify the windows in which to integrate with sufficient accuracy that the GPS receiver can be run in re-acquisition mode, thereby reducing the length of time that the receiver needs to be switched on and hence reducing the drain on the terminal's computation and power resources.

One of the ways of providing the time information is to use the signals from the communications network. In WO 2005/071430, it is shown how a network using technology such as GSM or W-CDMA can be regarded as a stable, but unsynchronized, repository of time. A calibration is first performed in a mobile terminal using the in-built GPS receiver to obtain a full position-and-time fix. The terminal also has a database of the communications network transmitter positions and is able to compute the times of flight from each transmitter to the mobile terminal. Furthermore, although the communications network may be unsynchronised so that the transmissions have arbitrary time offsets, the mobile terminal has access to, or is able to maintain, a list of these transmission time offsets which may, for example, be determined using the method as taught in WO 00/73813 and WO 00/73814. The calibration therefore establishes the transmission time offsets with respect to GPS time. At a later instant, for example when the mobile terminal has moved inside a building and the GPS signals are attenuated, the GPS time may be obtained from the receipt of signals from the communications network transmitters together with the calibration values. This provides a robust method of providing time assistance to the GPS receiver which is maintained through periods in which the mobile terminal may be turned off and which, in a GSM system, can be accurate at the microsecond level.

However, a problem encountered with the method taught in WO 2005/071430 is that a GNSS time and position fix must have been obtained in the recent past in order to calibrate the received network signals. The base-station transmitters are themselves connected to stable (but unsynchronised) clocks and, in effect, are being used a "wall clocks" which can be "read" in order to determine the interval of time passed since the calibration event. The present invention avoids the need to have a calibration event by providing accurate time information on demand.

An advantage of the present invention is that it may enable the start of the GNSS data sub frame to be determined. For example, the coarse acquisition (C/A) code of GPS, which is the code widely used at present for civilian purposes, is modulated with a 50-Hz data stream which carries, amongst other things, the satellite ephemeris data and clock-offset words. This data stream may, or may not, cause a reversal of the received signal carrier phase every 20 ms according to whether the data bit is a one or a zero. The data are divided into frames lasting 30 s, and sub-frames lasting six seconds. Most of the data in a sub-frame cannot be determined in advance, but the header byte of a sub-frame is always the same, 8B in hexadecimal format, providing 8 bits (160 ms) during which the bit transitions are known. The present invention may allow alignment of a terminal's clock accurately enough to enable coherent integration of the received signal over periods up to 160 ms in length, thereby increasing sensitivity to weak signals and maximising the probability of detecting the satellite signals.

Another advantage of the present invention is that it enables the time-of-day clock within a mobile terminal to be set without the need for the user to put in the time using the keypad after a battery failure, or a re-boot, or when first switching on the phone. Terminals of CDMA networks, which are synchronised to GPS time, already have an automatic facility built into the system design. However, terminals operating in unsynchronised networks such as GSM and W-CDMA can have no such support since the network signals are not aligned to each other, nor to any common time reference.

### Summary of the Invention

According to the invention there is provided a method of obtaining a time mark aligned with a known universal time boundary in a mobile terminal of a digital communications network, the method comprising the steps of
setting up a two-way connection between the mobile terminal and an answering point connected to a processor having access to a universal time clock;
generating in the answering point a first signal;
sending said first signal to the mobile terminal;
receiving said first signal at the mobile terminal and re-sending it back to the answering point;
receiving the re-sent signal at the answering point;
measuring the time delay between the generation and reception of the first signal at the answering point;
calculating, from said measured time delay, a second time delay between the generation of the signal at the answering point and the reception of the signal in the mobile terminal;
advancing by the second time delay, relative to the known universal time boundary, the timing of a second signal transmitted by the answering point; and
using said second signal received by the mobile phone as the time mark aligned with said known universal time boundary.

The known universal time boundary may be any time boundaries of any universal time. For example, it may a one-second tick from a clock locked to GPS time which marks the beginning of the next GPS second, or from another clock locked to Universal Coordinated Time (UTC). The ticks may or may not be regularly repeating with a period of any convenient length, for example 1 second, or 6 seconds, or 4.26 seconds.

The term "two-way connection" as used in the present application is of any type in which real-time exchange of information can take place. For example, in a GSM system, the connection may be a standard voice connection in which digitised voice signals are carried in time slots within frames on a data channel. If the requirement is to provide a time mark in the mobile terminal within, say, an accuracy of 10 ms, the variability on the link in each direction must be less than 10 ms.

The answering point may be located anywhere, but must be connected to the network in such a fashion that any terminal may call it. An example is an answering machine associated with a telephone number. The mobile terminal calls the number, either automatically or on demand by the user, and the answering machine responds in the manner according to the invention. The associated processor and universal time clock can be co-located with the answering machine, or either may be remote but connected to the answering point via a link with a known delay.

The first and second signals may be of any type suitable for marking the instants of generation and reception. A simple example might be a rectangular pulse, such that the start or end can be aligned with the universal time boundary. Signals of greater complexity may, in addition, carry information about the universal time boundary with which they are aligned, such that the time of day may be extracted from them, or a time delay (see below).

The mobile terminal may re-transmit (resend) the first signal with a known time delay. This time delay may be used in the mobile terminal to adjust the time associated with the received second signal. Alternatively, the time-delay may be sent to the answering point, encoded on the signal or in a separate message, so that it can make an adjustment to the amount by which the second signal is advanced. In another implementation, the mobile terminal makes its own adjustments both for the internal time delay and for the delay time between generating and receiving the signal.

Therefore, according to a second aspect of the invention there is provided a method of obtaining a time mark aligned with a known universal time boundary in a mobile terminal of a digital communications network, the method comprising the steps of
setting up a two-way connection between the mobile terminal and an answering point connected to a processor having access to a universal time clock;
generating in the answering point a signal aligned with said known universal time boundary;
sending said signal to the mobile terminal;
receiving said signal at the mobile terminal and re-sending it back to the answering point;
receiving the re-sent signal at the answering point;
measuring the time delay between the generation and reception of the re-sent signal at the answering point;
calculating, from said measured time delay, a second time delay between the generation of the signal at the answering point and the reception of the signal in the mobile terminal;
sending the calculated second time delay to the mobile terminal; and
using said signal received by the mobile phone as the time mark aligned with a delayed known universal time boundary, said delay being calculated using said calculated second time delay.

Clearly, a particular implementation might use features from both the first and second aspects of the invention. For example, a mobile terminal may make an adjustment for part of the total delay, and the answering point may make an adjustment for the remainder of the total delay by advancing the second signal. In such implementations, it is important that the mobile terminal is able to take account of the magnitude of the advancement, and so it is necessary for the answering point to send this information to the mobile terminal, either in a separate message or by encoding the second signal.

The invention also includes a system for obtaining a time mark aligned with a known universal time boundary in a mobile terminal of a digital communications network, the system including
a mobile terminal;
an answering point connected to a processor having access to a universal time clock, whereby a two-way connection between the mobile terminal and an answering point is provided in use;
means generating in the answering point a first signal and sending said first signal to the mobile terminal;
means receiving said first signal at the mobile terminal and re-sending it back to the answering point;
means receiving the re-sent signal at the answering point;
means measuring the time delay between the generation and reception of the first signal at the answering point;
means calculating, from said measured time delay, a second time delay between the generation of the signal at the answering point and the reception of the signal in the mobile terminal;
means advancing by the second time delay, relative to the known universal time boundary, the timing of a second signal transmitted by the answering point; and
means using said second signal received by the mobile phone as the time mark aligned with said known universal time boundary.

The invention further includes a system for obtaining a time mark aligned with a known universal time boundary in a mobile terminal of a digital communications network, the system including
a mobile terminal;
an answering point connected to a processor having access to a universal time clock, whereby a two-way connection between the mobile terminal and an answering point is provided in use;
means generating in the answering point a signal aligned with said known universal time boundary;
means sending said signal to the mobile terminal;
means receiving said signal at the mobile terminal and re-sending it back to the answering point;
means receiving the re-sent signal at the answering point;
means measuring the time delay between the generation and reception of the re-sent signal at the answering point;
means calculating, from said measured time delay, a second time delay between the generation of the signal at the answering point and the reception of the signal in the mobile terminal;
means sending the calculated second time delay to the mobile terminal; and
means using said signal received by the mobile phone as the time mark aligned with a delayed known universal time boundary, said delay being calculated using said calculated second time delay.

### Brief Description of the Drawings

Examples of methods according to the invention and an example of the system in which they may be deployed will now be further described with reference to the accompanying drawings, in which:
Figure 1 illustrates a communications network having base transceiver stations, an answering point, and a terminal of the network;
Figure 2 shows the main elements of an answering point; and
Figure 3 shows a terminal embodying the invention.

### Detailed Description

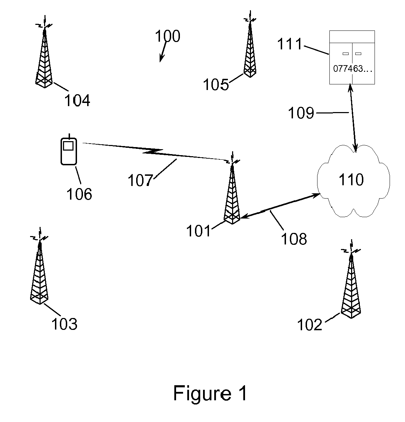

A GSM network 100 is illustrated in Figure 1 with Base Transceiver Stations 101-105. A mobile terminal 106 initiates a connection to the answering point 111 by dialling the appropriate number (077463... in this example). The two-way connection is established over the wireless link 107, hardware links 108 and 109, between BTS 101 and network infrastructure 110, and between the network infrastructure 110 and the answering point 111, respectively.

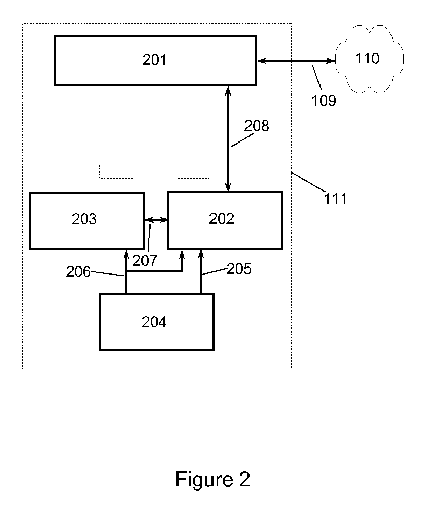

The principle elements of the answering point 111 are illustrated in Figure 2. Communications equipment 201 answers the incoming call from terminal 106 and establishes the connection via link 109 and network infrastructure 110 etc. as above. The communications equipment 201 is connected via a two-way link 208 with a processor 202. A clock 204, which is regulated by and aligned with GPS time (such clocks are available commercially), provides time of day information (year, month, day, hour, minute, second) to the processor 202 via a link 205, and clock pulses ('ticks') every second via a link 206 to a timer unit 203 and to the processor 202. The timer unit 203 is also connected to the processor 202 via a bi-directional link 207.

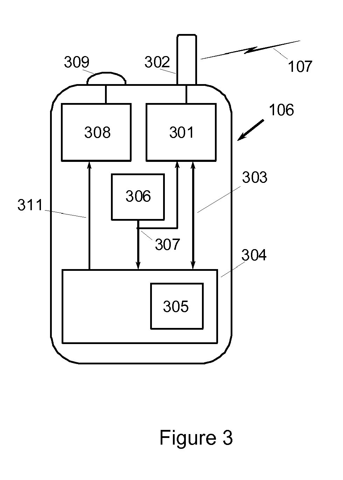

Figure 3 illustrates the principle elements of the mobile terminal 106. The object of the particular implementation of the invention in this case is to provide GPS time, within an accuracy of 10 ms, to a GPS receiver 308 carried in the terminal. A GSM communications module 301 sets up the call to the answering point 111 via communications antenna 302 and wireless link 107, as described above. It is connected to a processor 304 via a link 303. An oscillator 306 provides local clock signals for both the processor 304 and the communications module 301 on a link 307. A GPS receiver 308 receives signals from the GPS satellites (not shown) via an antenna 309. Processor 304 is controlled by a software program 305, to provide timing information to the GPS receiver 308 via a link 311.

The operation is as follows. Once the call has been established, the processor 202 in the answering point 111 generates a timing pulse (as a first signal) which, in one implementation, is aligned to the next one-second tick from the clock 204, followed by a string of pulses representing the time of day in binary format. Alignment with the time tick is not a necessary feature of the invention, and in another implementation an un-aligned pulse can be generated. The pulses are encoded in the usual way onto the normal GSM communications signals for a 'voice' call in the communications module 201 and transmitted to the mobile terminal 106 via the established call connection. The communications module 301 in the mobile terminal 106 receives the signal via the wireless link 107 and the antenna 302, decodes the pulses, and sends them to the processor 304, where they are immediately sent back to the communications module 301 and re-transmitted to the answering point 111 via the already-established call connection. The timing pulse (the first signal) generated in the answering point 111 is also used to start the timer 203. When the re-transmitted signal sent back by the terminal 106 is received by the communications module 201, it is decoded and the corresponding pulses are provided via link 208 to the processor 202 and are used, via link 207, to read the timer 203. The timer reading represents the total time taken for the round trip, including the encoding and decoding steps. The processor 202 now runs an algorithm which estimates the delay corresponding to the time taken between the generation of the time pulse in the answering point 111 and the decoding of the signal in the terminal 106. A simple algorithm, which might be suitable for a system in which the delays in the two directions were equal (with negligible delays in the terminal), would be to divide the total delay by two, but more-sophisticated algorithms would take account of typical processing delays in answering point 111 and the mobile terminal 106.

The answering point 111 now generates a second signal. This signal is similar to the first signal and consists of a pulse which is time-aligned with a one-second tick, as the universal time boundary, from the clock 204 advanced (made earlier in time) by the amount of the delay just calculated by the algorithm. Further pulses describing the time of day and the amount of the timing advancement in binary format are also generated, and these are sent to the terminal 106 using the established connection. The processor 304 receives the decoded information and provides the timing pulse as the one-second tick aligned with GPS time (the time mark), together with the time-of day information, to the GPS receiver 308. This allows the GPS receiver 308 to acquire satellites more quickly.

In an alternative embodiment, the answering point 111 measures and calculates the appropriate delay, but does not advance the second signal to correct for it. Instead, the delay is removed in the terminal 106. A software program 305 runs on the processor 304 and uses an algorithm to calculate the amount by which the time-aligned pulse received from the answering point is delayed with respect to the one-second GPS time boundary in the terminal 106, using the measured time delay sent by the answering point 111 and knowledge of the delays inside the terminal 106. The processor then generates a time mark which is in advance of (earlier than) the next following time-aligned pulse which would have been received from the answering point 111 had it been sent. This takes account of the delay which it provides to the GPS receiver 308 via the link 311.

In yet another embodiment, the time pulse generated in the answering point 111 is aligned with a time tick from the clock 204, and sent to the mobile terminal 106 where it is used to calibrate the local clock signals generated by the oscillator 306. The answering point measures the round-trip delay as before and estimates the time-delay on the connection from the answering point 111 and the mobile terminal 106. This estimate is sent to the mobile terminal 106 where the software program 305 estimates the amount by which local clock signals from the oscillator 306 need to be advanced in order to take account of the delay. The time mark is then generated from the advanced local clock signals.

## Claims

1. A method of obtaining a time mark aligned with a known universal time boundary in a mobile terminal of a digital communications network, the method comprising the steps of
setting up a two-way connection between the mobile terminal and an answering point connected to a processor having access to a universal time clock;
generating in the answering point a first signal;
sending said first signal to the mobile terminal;
receiving said first signal at the mobile terminal and re-sending it back to the answering point;
receiving the re-sent signal at the answering point;
measuring the time delay between the generation and reception of the first signal at the answering point;
calculating, from said measured time delay, a second time delay between the generation of the signal at the answering point and the reception of the signal in the mobile terminal;
advancing by the second time delay, relative to the known universal time boundary, the timing of a second signal transmitted by the answering point; and
using said second signal received by the mobile phone as the time mark aligned with said known universal time boundary.

2. A method of obtaining a time mark aligned with a known universal time boundary in a mobile terminal of a digital communications network, the method comprising the steps of
setting up a two-way connection between the mobile terminal and an answering point connected to a processor having access to a universal time clock;
generating in the answering point a signal aligned with said known universal time boundary;
sending said signal to the mobile terminal;
receiving said signal at the mobile terminal and re-sending it back to the answering point;
receiving the re-sent signal at the answering point;
measuring the time delay between the generation and reception of the re-sent signal at the answering point;
calculating, from said measured time delay, a second time delay between the generation of the signal at the answering point and the reception of the signal in the mobile terminal;
sending the calculated second time delay to the mobile terminal; and
using said signal received by the mobile phone as the time mark aligned with a delayed known universal time boundary, said delay being calculated using said calculated second time delay.

3. A method according to claim 1 or claim 2, wherein the known universal time boundary is a one-second tick from a clock locked to a global navigation satellite system time which marks the beginning of the next global navigation satellite system second.

4. A method according to claim 1 or claim 2, wherein the known universal time boundary is a one-second tick from a clock locked to Universal Coordinated Time (UTC).

5. A method according to claim 1 or claim 2, wherein the two-way connection is a voice connection in which digitised voice signals are carried in time slots within frames on a data channel.

6. A method according to claim 1 or claim 2, wherein the answering point is an answering machine associated with a telephone number and wherein when the mobile terminal calls the number, either automatically or on demand by the user, the answering machine responds.

7. A method according to claim 1 or claim 2, wherein the associated processor and universal time clock are co-located with the answering machine, or remote but connected to the answering point via a link with a known delay.

8. A method according to claim 1 or claim 2, wherein the first and second signals comprise rectangular pulses, such that the start or end can be aligned with the universal time tick.

9. A method according to claim 1 or claim 2, wherein the mobile terminal retransmits the first signal to the answering point with a known time delay.

10. A method according to claim 1, wherein the value of time delay is sent to the answering point, encoded on the signal or in a separate message, and the answering point makes an adjustment to the amount by which the second signal is advanced.

11. A method according to claim 1, wherein the mobile terminal makes adjustments both for the internal time delay and for the delay time between generating and receiving the second signal.

12. A method according to claim 1, wherein the mobile terminal makes an adjustment for part of the total delay, and the answering point makes an adjustment for the remainder of the total delay by advancing the second signal, the answering point sending the value of its advancement to the mobile terminal, either in a separate message or by encoding the second signal.

13. A system for obtaining a time mark aligned with a known universal time boundary in a mobile terminal of a digital communications network, the system including
a mobile terminal;
an answering point connected to a processor having access to a universal time clock, whereby a two-way connection between the mobile terminal and an answering point is provided in use;
means generating in the answering point a first signal and sending said first signal to the mobile terminal;
means receiving said first signal at the mobile terminal and re-sending it back to the answering point;
means receiving the re-sent signal at the answering point;
means measuring the time delay between the generation and reception of the first signal at the answering point;
means calculating, from said measured time delay, a second time delay between the generation of the signal at the answering point and the reception of the signal in the mobile terminal;
means advancing by the second time delay, relative to the known universal time boundary, the timing of a second signal transmitted by the answering point; and
means using said second signal received by the mobile phone as the time mark aligned with said known universal time boundary.

14. A system for obtaining a time mark aligned with a known universal time boundary in a mobile terminal of a digital communications network, the system including
a mobile terminal;
an answering point connected to a processor having access to a universal time
clock, whereby a two-way connection between the mobile terminal and an answering point is provided in use;
means generating in the answering point a signal aligned with said known universal time boundary;
means sending said signal to the mobile terminal;
means receiving said signal at the mobile terminal and re-sending it back to the answering point;
means receiving the re-sent signal at the answering point;
means measuring the time delay between the generation and reception of the re-sent signal at the answering point;
means calculating, from said measured time delay, a second time delay between the generation of the signal at the answering point and the reception of the signal in the mobile terminal;
means sending the calculated second time delay to the mobile terminal; and
means using said signal received by the mobile phone as the time mark aligned with a delayed known universal time boundary, said delay being calculated using said calculated second time delay.
